# EUROPEAN PATENT SPECIFICATION

(11) **EP 3 855 933 B1**
(45) Date of publication and mention of the grant of the patent: **17.09.2025**
(21) Application number: 19794732.8
(22) Date of filing: 20.09.2019
(51) Int. Cl.: A23L 2/02, A23L 2/06

(54) **COMPOSITIONS AND METHODS FOR REDUCING SUGAR CONTENT IN JUICES**
ZUSAMMENSETZUNGEN UND VERFAHREN ZUR REDUZIERUNG DES ZUCKERGEHALTES IN FRUCHTSÄFTEN
COMPOSITIONS ET PROCÉDÉS POUR RÉDUIRE LA TENEUR EN SUCRE DANS DES JUS

(30) Priority: 25.09.2018 US 201862736315 P
(43) Date of publication of application: 04.08.2021
(73) Proprietor: Tropicana Products, Inc., Bradenton, FL 34208 (US)
(72) Inventor: RIVERA, Teodoro, Algonquin, Illinois 60102 (US); HANDRICK, Lisa, Palatine, Illinois 60067 (US); MCLEAN, Kyle, Chicago, Illinois 60641 (US); PARCON, Jason Casuga, Hoffman Estates, Illinois 60169 (US); CARDER, Gary D., Barrington Hills, Illinois 60010 (US)
(74) Representative: McNamara, Kathryn
(86) International application number: PCT/US2019/052150
(87) International publication number: WO 2020/068581

(56) References cited:
- DATABASE GNPD [online] MINTEL; 4 April 2018 (2018-04-04), ANONYMOUS: "Apple Pineapple Flavored Juice Blend", XP055649786, retrieved from https://www.gnpd.com/sinatra/recordpage/5570245/ Database accession no. 5570245
- DATABASE GNPD [online] MINTEL; 4 April 2018 (2018-04-04), ANONYMOUS: "Apple Cranberry Flavored Juice Blend", XP055649784, retrieved from https://www.gnpd.com/sinatra/recordpage/5570247/ Database accession no. 5570247
- DATABASE GNPD [online] MINTEL; 4 April 2018 (2018-04-04), ANONYMOUS: "Apple Raspberry Flavored Juice Blend", XP055649788, retrieved from https://www.gnpd.com/sinatra/recordpage/5570243/ Database accession no. 5570243
- "The juice lover's big book of juices", 1 January 2016, article VANESSA SIMKINS: "The juice lover's big book of juices", XP055650089
- DATABASE GNPD [online] MINTEL; 4 April 2018 (2018-04-04), ANONYMOUS: "Apple Cranberry Flavored Juice Blend", XP055649784, retrieved from www.gnpd.com Database accession no. 5570247
- DATABASE GNPD [online] MINTEL; 4 April 2018 (2018-04-04), ANONYMOUS: "Apple Raspberry Flavored Juice Blend", XP055649788, retrieved from www.gnpd.com Database accession no. 5570243
- DATABASE GNPD [online] MINTEL; 4 April 2018 (2018-04-04), ANONYMOUS: "Apple Pineapple Flavored Juice Blend", XP055649786, retrieved from www.gnpd.com Database accession no. 5570245

## Description

### TECHNICAL FIELD

The present disclosure relates generally to juice products and, more particularly, to juice beverages that include one or more low-sugar juices.

### BACKGROUND

One hundred percent juices are often desirable to consumers looking to consume natural ingredients such as fruits and vegetables. These types of juices may include fruit juices, vegetable juices, concentrates, purees, nectars, and other ingredients obtained from fruits and vegetables.

Some consumers have become increasingly concerned with limiting caloric intake from juice. Typically, juices consumed as beverages contain from 10 grams of sugar to 40 grams of sugar per 250 mL serving. Although sugar is not typically added to 100% juices, it is naturally present in fruits and vegetables.

Low-calorie foods may, in some instances, lack flavor as compared to their full-calorie counterpart foods. For example, consumers may perceive some low-calorie foods as insufficiently sweet. Manufacturers have tried to counter this problem by adding sugar substitutes and flavorings to make the low-calorie food taste more like its full-calorie counterpart. For example, low-calorie orange juice products have been produced by diluting orange juice with drinking water and adding sweeteners, coloring, and flavoring. However, some consumers can still detect differences between such products and their full-calorie counterparts. Furthermore, certain artificial ingredients, including sweeteners, are often not well-received by some consumers. Vanessa Simkins: "The juice lover's big book of juices"In: "The juice lover's big book of juices", 1 January 2016 (2016-01-01) discloses various recipes of green juices including coconut water or lettuce juice.

DATABASE GNPD [Online] MINTEL; 4 April 2018 (2018-04-04), anonymous: "Apple Pineapple Flavored Juice Blend", Database accession no. 5570245, DATABASE GNPD [Online] MINTEL; 4 April 2018 (2018-04-04), anonymous: "Apple Cranberry Flavored Juice Blend",Database accession no. 5570247 and DATABASE GNPD [Online] MINTEL; 4 April 2018 (2018-04-04), anonymous: "Apple Raspberry Flavored Juice Blend",Database accession no. 5570243 disclose low sugar beverages comprising various juice concentrates such as apple juice, coconut water and lettuce juice.

### SUMMARY

The present disclosure relates to juice beverages having reduced calorie content. In a first embodiment, novel aspects of the present disclosure are directed to a juice beverage comprising:
- from 40 wt. % to 85 wt. % of an orange juice base having a Brix value from 11 °Bx to 15 °Bx;
- from 15 wt. % to 30 wt. % of coconut water having a Brix value from 2 °Bx to 6 °Bx and
- from 2 wt. % to 10 wt. % of lettuce juice having a Brix value from 2 °Bx to 4 °Bx such that the Brix value of the lettuce juice is lower than the Brix value of the coconut water;
wherein the juice beverage has organoleptic properties that are similar to identical organoleptic properties of the juice base, wherein the organoleptic properties include aroma, flavor, mouthfeel, texture, aftertaste, citrus flavor, orange flavor, fresh/raw orange flavor, total vegetable flavor, celery flavor, cucumber flavor, sweetness, saltiness, bitterness, astringent flavor, viscosity, or mouth drying and wherein similarity is evaluated by a trained sensory panel consisting of trained experts.

In a second embodiment, novel aspects of the present disclosure are directed to a method of making a juice beverage, the method comprising providing from 40 wt.% to a 85 wt.% of an orange juice base having a Brix value from 11 °Bx to 15 °Bx;
providing from 15 wt.% to 30 wt.% of coconut water having a Brix value from 2 °Bx to 6 °Bx;providing from 2 wt.% to 10 wt.% of lettuce juice having a Brix value from 2 °Bx to 4 °Bx, wherein the Brix value of the lettuce juice is lower than the Brix value of the coconut water; and
combining the orange juice base with the coconut water and lettuce juice to produce the juice beverage, wherein the juice beverage has a Brix value lower than the Brix value of the orange juice base and wherein a sugar concentration in the juice beverage is 20% to 40% lower than a sugar concentration in the orange juice base.

These and other objects, along with advantages and features of the present disclosure, will become apparent through reference to the following description and the accompanying drawing. Furthermore, it is to be understood that the features of the various embodiments described herein are not mutually exclusive and can exist in various combinations and permutations.

### BRIEF DESCRIPTION OF THE DRAWINGS

The detailed description particularly refers to the following figure, in which:

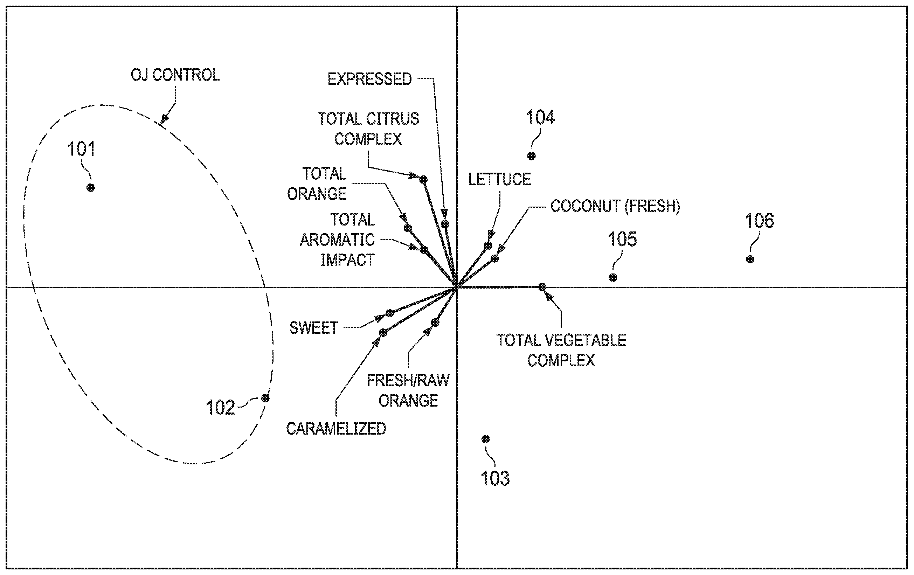

FIG. 1 is a principle component analysis chart depicting sensory attributes determined for formulations having varying amounts of orange juice, coconut water, and lettuce juice.

### DETAILED DESCRIPTION

While the concepts of the present disclosure are susceptible to various modifications and alternative forms, specific exemplary embodiments thereof have been shown by way of example in the drawing and will herein be described in detail.

The present disclosure relates generally to juice beverages, such as 100% juice beverages, having reduced calorie content. In particular, a juice beverage of the present disclosure may have organoleptic properties that are similar to, substantially the same as, or the same as the organoleptic properties of a juice base used to make the juice beverage, while containing fewer calories per serving than the juice base alone. Organoleptic properties include, without limitation, those properties related to aroma, flavor, mouthfeel, texture, or aftertaste. More specific examples of organoleptic properties can include, without limitation, citrus flavor, orange flavor, fresh/raw orange flavor, total vegetable flavor, celery flavor, cucumber flavor, sweetness, saltiness, bitterness, astringent flavor, viscosity, and mouth drying.

Juice beverages described herein include mixtures of juices. As used herein, the term "juice" is defined as a liquid extracted from a fruit, vegetable or plant. Examples of juices include, without limitation, fruit juice, vegetable juice, plant juice, plant water, and plant sap. Examples of juices also include juices that are reconstituted from-concentrate (FC) juices, not-from-concentrate (NFC) juices, purees, nectars or combinations thereof. The juice beverages described herein include a juice base and one or more liquids comprising a juice having fewer calories per serving than the juice base. The juice beverages described herein have desirable organoleptic attributes (for example, organoleptic attributes similar to those of the juice base), while also having fewer calories per serving and less sugar per serving than the juice base. In some embodiments, the one or more lower-calorie liquids may, when evaluated alone, have one or more undesirable organoleptic attributes. However, the combination of juice base and one or more lower-calorie juices synergistically form a juice blend having a desirable organoleptic profile that eliminates or attenuates undesirable attributes of the one or more lower-calorie juices.

As is further discussed herein, the juice beverage may comprise juice from two or more natural sources. Natural sources include but are not limited to fruits, vegetables, and other plants. In some embodiments, the juice beverage is made entirely of ingredients from natural sources. For example, in some embodiments, the juice beverage is 100%, about 100%, greater than about 99.9%, greater than about 99% juice by weight.

The combination of juices that make up the juice beverage is chosen such that the organoleptic properties of the juice beverage are similar to, substantially the same as, or the same as that of the juice base, as determined by a trained sensory panel.

The juice beverage is based on orange juice.

In some embodiments, the juice beverages are made entirely of ingredients from natural sources. Alternatively, the juice beverages may include one or more non-natural ingredients. Optionally, the juice beverages may be made entirely from organic ingredients. The juice beverages may optionally be made entirely from non-GMO ingredients.

The juice beverage includes orange juice as a juice base.

The juice base has a concentration of sugar greater than that of the resulting juice beverage. The amounts of sugar in the juice beverage, juice base, or lower-calorie liquids of the present disclosure may be measured in terms of grams of sugar per mL.

Alternatively, the concentration of sugar in a juice beverage, juice base, or lower-calorie liquid may be expressed in terms of Brix. As used herein, "Brix" values are based on a refractive index obtained at a temperature of 20 °C according to the Harmonized Tariff Schedule of the United States (HTSUS), Revision 9. Additionally, the Brix value of a particular juice refers to the Brix level of that juice in single-strength form (i.e., not from concentrate or reconstituted from concentrate). For example, FC orange juice has a Brix value that is comparable to NFC orange juice even when it is diluted from a juice concentrate format. In the United States, the standard identity for orange juice made from concentrate is at least 11.8 °Bx.

The orange juice base has a Brix level from 11 to 15 Bx. Effectively reducing the Brix level of a juice base having a Brix of greater than 10 °Bx is highly challenging because such juice bases are widely perceived as sweet beverages. Thus, the technical challenge of reducing the Brix level without negatively affecting the organoleptic attributes associated with the juice base is significant, and gets increasingly difficult at increasing Brix levels of the juice base.

The amount of the orange juice base present in the juice beverage is from 40% to 85% by weight of the juice beverage. In a preferred embodiment, the amount of the juice base present in the juice beverage may be from about 50% to about 80% by weight of the juice beverage.

The juice base is mixed with one or more liquids, with each liquid having lower calorie content per serving than the juice base. The lower-calorie liquids may be juices (for example, fruit juices, vegetable juices, and/or plant waters). The one or more lower-calorie liquids may be derived from plant material. Additionally, the one or more lower-calorie liquids are complementary with the juice base and/or other lower-calorie liquids, allowing for a desirable organoleptic profile. In particular, the lower-calorie liquids may be selected such that the juice beverage has an organoleptic profile similar to that of the juice base alone, but without undesirable attributes or with limited undesirable attributes that may be associated with the one or more of the lower-calorie liquids, individually.

A lower-calorie liquid of the present disclosure may include juice, plant water, plant juice, or plant sap selected from the group consisting of coconut, watermelon, beet, ginger, potato, turnip, rutabaga, bamboo, birch, maple, cactus, aloe, sugarcane, barley, lettuce, collard greens, Swiss chard, arugula, watercress, winter melon, tomato, celery, onion, cucumber, parsley, cilantro, basil, mint, fennel, dill, wheat grass, asparagus, artichoke, olive, and the like.

A lower-calorie liquid employed in connection with the present disclosure has a lower concentration of sugar compared to the sugar concentration of the juice base. The sugar concentration of any of the lower-calorie liquids of the present disclosure may be measured in terms of grams of sugar per mL of liquid.

The juice base is mixed with at least two of the lower-calorie liquids described herein. The first and second lower-calorie liquids may be complementary with each other such that undesirable attributes that may be associated either or both of the first and second lower-calorie liquids are attenuated. In particular, undesirable attributes may become less significant when the juice beverage is evaluated by a trained sensory panel. As such, the first and second lower-calorie liquids may allow for a desirable organoleptic profile in the juice beverage.

The first lower-calorie liquid is coconut water.

Coconut water comprises a clear to opaque liquid found inside coconuts. This liquid may be extracted from the coconut by drilling a hole into or otherwise opening the exterior of the coconut to access the interior. Coconut water may be formed from a concentrate or a puree. In some embodiments, other parts of the coconut may be included in coconut water, such as the pulp, milk, or oil. Coconuts used to make coconut water may be procured from tall, hybrid, or dwarf coconut trees from various parts of the world.

The sugar content of the first lower-calorie liquid may be expressed in terms of Brix. The first lower-calorie liquid has a Brix level from to 6 °Bx.

In some embodiments, the first lower-calorie liquid has salty, nutty, or sweaty flavor attributes. Combining the first lower-calorie liquid with the second lower-calorie liquid and/or the juice base may attenuate these flavor attributes.

The second lower-calorie liquid is lettuce juice.

Lettuce juice comprises a liquid extracted from lettuce using juicing methods. For example, lettuce juice may be extracted from lettuce using masticating, centrifugal, and/or triturating methods. For example, lettuce juice may be formed from a concentrate or a puree.

The sugar content of the second lower-calorie liquid may be expressed in terms of Brix. The second lower-calorie liquid as a Brix level from 2 to 4 °Bx.

In some embodiments, the second lower-calorie liquid has vegetal flavor attributes. Combining the second lower-calorie liquid with the first lower-calorie liquid and/or the juice base may attenuate these flavor attributes.

The second lower-calorie liquid has a lower sugar concentration than the sugar concentration of the first lower-calorie liquid. In particular, the second lower-calorie liquid may have a Brix value that is about 5% to about 90% lower than the Brix value of the first lower-calorie liquid. In a preferred embodiment, the second lower-calorie liquid has a Brix value that is about 10 % to about 75% lower than the Brix value of the first lower-calorie liquid.

According to the invention, the juice base is orange juice, the first lower-calorie liquid is coconut water and is about 15 to about 30 % by weight of the juice beverage, and the second lower-calorie liquid is lettuce juice and is about 2 to about 10 % by weight of the juice beverage.

In some embodiments, the juice beverage is free or substantially free of additives. For example, the juice beverage may be free or substantially free of complementary flavors, sweeteners, maskers, and/or sugars.

In alternative embodiments, the juice beverage may include one or more additives. As used herein, an "additive" refers to an ingredient that is not a fruit juice, vegetable juice, or plant water. Illustrative additives include but are not limited to complementary flavors, sweeteners, maskers, and sugars.

In some embodiments, the juice beverage includes one or more additional plant components. Exemplary additional plant components may be selected from the group consisting of grains, herbs, and botanicals.

In some embodiments, the juice beverage includes one or more non-plant components, such as nutraceuticals, bioactives, or functional ingredients. Exemplary non-plant components may be selected from the group consisting of fatty acids such as omega-3 fatty acids, probiotics, prebiotics, vitamins, and minerals. For example, the juice beverage may include added vitamins and/or minerals, such as vitamin D and calcium.

In some embodiments, the juice beverage includes one or more flavor enhancers such as flavorings with modifying properties (FMPs). Flavor enhancers may be natural or non-natural ingredients. It is contemplated that flavor enhancers may be sweeteners. Exemplary sweeteners may be selected from the group consisting of sucralose, aspartame, saccharin, stevia, acesulfame potassium, erythritol, glycerol, cyclamate, lactitol, maltitol, sorbitol, xylitol, mannitol, monk fruit, advantame, isomalt, neotame, and the like, or a combination thereof. In some embodiments, the stevia comprises Rebaudioside A. Additionally, flavor enhancers may be oils from fruit or fruit peel. In some embodiments, flavor enhancers include oils from orange peel.

In some embodiments, the juice beverage includes about 0.001 to about 0.2 wt. % flavor enhancers. For example, the juice beverage may optionally comprise about 0.01 to about 0.1, or about 0.08 wt. % of FMPs. Furthermore, the juice beverage may optionally include about 0.001 to about 0.01, or about 0.006 wt. %, citrus oils.

In some embodiments the juice beverage includes pulp. In some embodiments, the juice beverage does not include pulp.

The juice beverage may also include one or more dairy products. The dairy products may be milk or a derivative thereof. Alternatively, the juice beverage may comprise one or more dairy substitutes such as soy milk, almond milk, rice milk, cashew milk, hemp milk, flax milk, or combinations thereof.

Some fruit juices, but more commonly, vegetable juices, have a naturally high pH, above 4.5. Depending on the pasteurization process, transport, and storage of the juice beverage, it may be desirable to acidify high pH juice ingredients or to acidify the juice beverage itself. Acidification can be accomplished by, for example, adding an acid such as citric acid or by adding high-acid juices to reduce pH levels. In some embodiments, pH levels of the juice beverage or juice ingredients are reduced to below about 4.5. In a preferred embodiment, the juice beverage comprises a pH below 4.5.

In some embodiments, a juice beverage may be formed from one or more from concentrate (FC) juices. In alternative embodiments, the juice beverage may be formed entirely from not from concentrate (NFC) juices. In other embodiments, the juice beverage may be formed from a combination of FC and NFC juices.

Juicing may be performed by various methods known in the art, including but not limited to masticating juicing, centrifugal juicing, and triturating methods. Masticating juicing, also known as cold-pressed juicing, may include the steps of shredding the fruit or vegetable, loading the contents into a porous filter bag, subjecting the bag to pressure, and collecting the resulting juice that is dispensed from the bag. Centrifugal juicing may include the steps of loading fruit or vegetable pieces into a porous basket having one or more spinning blades, where the contents are subjected to high speeds and juice passes through the basket while the pulp remains therein. Triturating juicing may utilize a dual auger system that crushes and grinds fruit or vegetable contents as they pass between augers, followed by extracting the resulting juice.

A resulting juice beverage of the present disclosure has a lower sugar concentration compared to the juice base used to make the juice beverage. The sugar concentration, as measured by grams of sugar per mL, in the juice beverage is

The juice beverage may match or substantially match various attributes of its corresponding juice base. Similarity of attributes may be determined using Quantitative Descriptive Analysis (QDA^{®}). The attributes may be evaluated by a trained sensory panel consisting of trained experts who compare attributes of the juice base to those of the juice beverage.

Attributes evaluated by the trained sensory panel may include aroma, flavor, mouthfeel, texture, and aftertaste. Additionally, attributes may include various appearance attributes including color, brightness, viscosity, opaqueness, and amount of pulp. Attributes may include various aroma attributes including fresh orange aroma, artificial orange aroma, citrus aroma, and bitter aroma. Attributes may include various flavor attributes including flavor strength, fruit juice flavor, fresh orange flavor, artificial orange flavor, pineapple flavor, coconut flavor, banana flavor, concentration, citrus flavor, total vegetable flavor, celery flavor, cucumber flavor, sweetness, saltiness, sourness, tanginess, bitterness, chemical flavor, stale flavor, and astringent flavor. Attributes may include various mouthfeel attributes including staleness, bite, and mouth drying.

In some embodiments, comparison of these attributes as measured using QDA^{®} results in a fit to control value of greater than about 80, greater than about 85, greater than about 90, or greater than about 95%.

### EXAMPLES

Table 1 summarizes three exemplary blends, wherein each blend comprises a juice base, which is blended with lettuce juice and coconut water to produce a final blend (juice beverage) having a sensory profile similar to the juice base. Examples 1-4 are further described in the paragraphs that follow.

**Table 1**

| | **Juice Base** | **Juice Base (wt.%)** | **Brix of Juice Base** | **Lettuce Juice (wt. %)** | **Coconut Water (wt. %)** | **Added Flavors (wt. %)** | **Brix of Final Juice Beverage** | **Brix Reduction (%)** | **FTC (%)** |
|---|---|---|---|---|---|---|---|---|---|
| **Example 1** | Orange Juice | 70 | 11.3 | 6.00 | 24.00 | 0 | 8.9 | -21.13 | 91.30 |
| **Example 2** | Green Mixture | 70 | 12.2 | 20.60 | 9.40 | 0 | 9.4 | -22.74 | 82.70 |
| **Example 3** | Apple Juice | 70 | 11.5 | 8.00 | 22.00 | 0 | 9.0 | -21.43 | 93.00 |
| **Example 4** | Orange Juice | 69.914 | 11.3 | 6.00 | 24.00 | 0.086* | 8.9 | -21.13 | 96.5 |

| | | | | | | | | | |
|---|---|---|---|---|---|---|---|---|---|
| * Flavors included 0.08 wt. % of FMP flavors and 0.006 wt. % of orange flavor (citrus oils/keys) | | | | | | | | | |

Examples 2 and 3 are not part of the invention. In Example 1 of Table 1, desirable concentrations of lettuce juice, coconut water, and orange juice were determined. In particular, descriptive analyses were used to obtain quantitative sensory attribute intensities of the juice blends tested. A design of experiments was conducted with 12 low-Brix liquids derived from various plant materials including lettuce, cucumber, celery, and coconut. Once the formulas were developed, samples were made in the pilot plant and tested for sensory attributes to generate composite fit to control (FTC) calculations. Attributes that were tested included aroma, flavor, mouthfeel, texture, and aftertaste. More specifically, attributes included citrus flavor, orange flavor, fresh/raw orange flavor, total vegetable flavor, celery flavor, cucumber flavor, sweetness, saltiness, bitterness, astringent flavor, viscosity, and mouth drying.

The composite FTC compares the sensory profile of the juice beverage with the sensory profile of the juice base quantified by percent match from 0% to 100%. The control is the juice base alone, and 100% represents the best sensory match of the juice beverage to juice base control. Brix and sugar reduction values are based on sugar content of the specific fruits and vegetables used in the experiments.

As shown in Table 2 below, Options 1-8 reflect a comparison of orange juice blended with lettuce juice, celery juice, cucumber juice, and/or coconut water. Using a 70% orange juice base, coconut water and lettuce juice each showed favorable results with FTC values of 90.1% and 88.2%, respectively.

**Table 2**

| **Formulation** | **Orange Juice (wt.%)** | **Lettuce Juice (wt. %)** | **Cucumber Juice (wt. %)** | **Celery Juice (wt. %)** | **Coconut Water (wt.%)** | **FTC (%)** | **Brix Reduction (%)** |
|---|---|---|---|---|---|---|---|
| Control | 100% | 0 | 0 | 0 | 0 | 100% | NA |
| Option 1 | 85% | 5.50% | 0 | 0 | 9.50% | 94.8% | 10.7% |
| Option 2 | 80% | 7% | 0 | 0 | 13% | 93.7% | 14.2% |
| Option 3 | 75% | 8% | 0 | 0 | 17% | 92.5% | 17.7% |
| Option 4 | 70% | 6% | 0 | 0 | 24% | 91.3% | 20.8% |
| Option 5 | 70% | 30% | 0 | 0 | 0 | 88.2% | 23.1% |
| Option 6 | 70% | 0 | 30% | 0 | 0 | 83.6% | 22.9% |
| Option 7 | 70% | 0 | 0 | 30% | 0 | 77.5% | 22.1% |
| Option 8 | 70% | 0 | 0 | 0 | 30% | 90.1% | 20.3% |

Options 5 to 8 are not part of the invention. More specifically, the combination of coconut water and lettuce juice with orange juice produced favorable results. Surprisingly, the combination of coconut water and lettuce juice with 70% orange juice, shown in Option 4 of the chart, produced an even better FTC value than the 70% orange juice blends having only coconut water or only lettuce juice.

In particular, it was found that each lower-calorie liquid, when combined with a juice base, produced flavor attributes that noticeably differed from the attributes of the juice base by itself. However, the combination of the two lower-calorie liquids had a synergistic effect at reducing the individual attributes of the lower-calorie liquids that differed from the full-calorie juice base. For example, coconut water alone was generally associated with a salty attribute and lettuce juice alone was generally associated with a vegetable attribute. Some consumers might consider a salty or vegetal attribute as undesirable in a fruit juice beverage product. Surprisingly, when coconut water and lettuce juice were combined, the intensity of the salty and vegetal attributes were perceived to be reduced, resulting in an increased FTC.

A second set of experiments focusing only on coconut water and lettuce juice with an orange juice base was completed. FIG. 1 is a principle component analysis chart depicting sensory attributes from these experiments. The following **Table 3** is a summary of the formulations charted in FIG. 1. All percentages are by weight of the entire formulation.

**Table 3**

| **Label Number** | **Formulation** |
|---|---|
| **101** | Orange Juice Control |
| **102** | 85% Orange Juice |
| | 7.5% Coconut Water |
| | 7.5% Lettuce Juice |
| **103** | 85% Orange Juice |
| | 15% Coconut Water |
| **104** | 85% Orange Juice |
| | 15% Lettuce Juice |
| **105** | 76.25% Orange Juice |
| | 20% Coconut Water |
| | 3.75% Lettuce Juice |
| **106** | 76.25% Orange Juice |
| | 11.25% Coconut Water |
| | 12.5% Lettuce Juice |

Label numbers 102,103,104 and 106 are not part of the inventions. In FIG. 1, the samples and attributes located close to one another on the plot are positively correlated. For example, the orange juice control 101 was more positively correlated with sample 102 made from 85% orange juice and an equal blend of lettuce juice and coconut water, when compared to blends having 85% orange juice with either only lettuce juice 104 or only coconut water 103. The study also found that the orange juice blend 105 having a higher ratio coconut water to lettuce was directionally more similar to 100% orange juice than the orange juice blend 106 having more lettuce juice than coconut water.

Other sensory methods were used to validate the results of experiments described above. For example, one of the methods employed included a Quantitative Descriptive Analysis (QDA^{®}) with a trained sensory panel. The panel was trained to quantify attributes in the following categories: appearance (AP), flavor (FL), aroma (AR), and aftertaste (AF).

Table 4 shows the 100% orange juice control compared with a 70% orange juice blended with 30% lettuce juice, 70% orange juice blended with 30% coconut water, 70% orange juice blended with 15% coconut water and 15% lettuce juice, and 70% orange juice blended with 24% coconut water and 6% lettuce juice. Similar attributes were identified using Tukey's test with a 10% significance level. In Table 4 below, similar attributes are indicated by a check mark and dissimilar attributes are indicated by an "X". The result showed that the juice beverage having the higher amounts of coconut water with lettuce juice had the highest number of similar attributes to the control. In particular, for 70% orange juice with 30% coconut water, (not part of the invention), 9 attributes were similar to control. For 70% orange juice with 15% coconut water and 15% lettuce juice, (not part of the invention) 15 attributes were similar to control. For 70% orange juice with 24% coconut water and 6% lettuce juice, 17 attributes were similar to control. For 70% orange juice with 30% lettuce juice, (not part of the invention), 13 attributes were similar to control.

**Table 4**

| **Attribute** | **NFC OJ 70%, NFC CCW 30%** | | **OJ 70%, CCW 15%, Lett 15%** | | **OJ 70%, CCW 24%, Lett 6%** | | **OJ 70%, Lett 30%** | | **TPP NFC OJ CONTROL** |
|---|---|---|---|---|---|---|---|---|---|
| AP Color, yellow to orange | 37.09 | X | 38.85 | ✔ | 37.42 | X | 40.62 | ✔ | 43.01 |
| AP Brightness | 40.25 | X | 48.97 | ✔ | 52.68 | ✔ | 54.22 | ✔ | 47.44 |
| AP Thickness/Viscosity | 33.38 | X | 31.55 | X | 29.17 | X | 34.15 | X | 42.29 |
| AP Opaqueness | 74.92 | X | 73.37 | X | 72.52 | X | 73.21 | X | 78.20 |
| AP Amount of Pulp/Granules | 13.39 | X | 15.89 | ✔ | 18.81 | ✔ | 15.76 | ✔ | 18.97 |
| AR Fresh Orange | 29.59 | ✔ | 26.36 | X | 27.49 | ✔ | 23.91 | X | 33.06 |
| AR Artificial Orange | 29.46 | X | 22.66 | ✔ | 24.77 | ✔ | 21.41 | ✔ | 22.25 |
| AR Citrus | 21.88 | ✔ | 28.89 | X | 27.88 | ✔ | 26.98 | ✔ | 24.17 |
| AR Bitter | 15.25 | ✔ | 15.85 | ✔ | 17.65 | ✔ | 19.52 | X | 14.38 |
| FL Flavor Strength | 62.12 | X | 61.09 | X | 61.7 | X | 64.02 | X | 69.56 |
| FL Fresh Orange | 27.38 | X | 26.89 | X | 27.03 | X | 23.25 | X | 39.70 |
| FL Artificial Orange Flavor | 43.21 | X | 30.96 | ✔ | 31.81 | ✔ | 36.69 | V | 32.28 |
| FL Concentrate | 45.15 | X | 45.67 | X | 45.47 | X | 47.26 | X | 38.44 |
| FL Citrus | 28.24 | ✔ | 37.43 | ✔ | 34.79 | ✔ | 37.4 | ✔ | 32.49 |
| FL Sweet | 30.82 | X | 30.99 | X | 33.46 | X | 25.04 | X | 42.94 |
| FL Sour | 37.65 | X | 37.93 | ✔ | 34.51 | V | 36.78 | ✔ | 31.50 |
| FLTangy | 34.45 | X | 45.91 | ✔ | 49.24 | ✔ | 45 | ✔ | 45.88 |
| FL Bitter | 21.63 | ✔ | 25.65 | X | 25.26 | X | 29.27 | X | 17.59 |
| FL Chemical | 37.83 | ✔ | 42.06 | X | 38.67 | X | 44.08 | X | 31.39 |
| FL Stale | 35.83 | X | 33.62 | X | 30.8 | ✔ | 39.14 | X | 26.18 |
| MF Bite | 25.74 | X | 31.32 | ✔ | 34.47 | V | 32.41 | ✔ | 31.60 |
| MF Thickness | 30.77 | X | 26.85 | X | 29.07 | X | 30.13 | X | 35.69 |
| AF Flavor Strength | 46.13 | X | 48.94 | ✔ | 48.09 | ✔ | 49.99 | ✔ | 53.59 |
| AF Fresh Orange | 20.42 | X | 23.75 | X | 25.03 | X | 20.44 | X | 32.86 |
| AF Sweet | 20.03 | X | 21.43 | X | 23.63 | X | 20.67 | X | 32.34 |
| AF Artificial Sweet | 16.46 | ✔ | 10.03 | ✔ | 10.92 | ✔ | 12.28 | ✔ | 13.00 |
| AF Bitter | 20.44 | ✔ | 22.84 | V | 18.38 | ✔ | 24.82 | X | 17.76 |
| AF Chemical | 29.41 | ✔ | 31.72 | X | 26.02 | V | 33.43 | X | 24.38 |
| AF Stale | 28.63 | X | 22.84 | ✔ | 20.84 | ✔ | 27.06 | X | 18.44 |
| AF Lasting | 37.77 | X | 46.47 | ✔ | 40.27 | X | 44.7 | ✔ | 46.36 |

Additional formulations were created to focus on enhancing the FTC of the blends in order to further emulate the orange juice base control. The enhancements were intended to fill in taste attributes such as citrus flavor and sweetness intensity that were reduced as a result of blending the lower-calorie liquids with the juice base. As shown in Example 4 of Table 1, 0.08 wt. % of sweetener enhancer (a Flavor with Modifying Properties (FMP) natural flavor from International Flavors & Fragrances Inc.) and 0.006 wt. % of orange flavor (citrus oils/keys) were added to a blend with 69.914 wt. % orange juice, 24 wt. % coconut water, and 6 wt. % lettuce juice. The flavor enhancement improved the FTC of the blend from 91.3% to 96.5% when compared to the similar blend of Example 1 in which no flavor enhancers were added. In an alternate example, blends produced to have 30% or higher sugar/Brix reduction were enhanced by adding stevia at about 70 ppm or higher depending on the sugar/Brix reduction level.

Other example formulations demonstrated that the preferred ratio of coconut water to lettuce juice may vary depending on the identity of the juice base. For example, a ratio of coconut water to lettuce juice may be modified in order to achieve a reduced Brix value in the juice blend while emulating the sensory profile of the juice base.

Referring back to Table 1, in Example 2, (not part of the invention), a green juice mixture containing juice from sweet potatoes, grapes, apples, bananas, mangoes, pineapple, oranges, carrots, limes, kale, and spinach was found to have improved taste when the lettuce juice concentration was higher than that of coconut water. For example, in one alternative not part of the invention, 70% of the green juice was blended with 20.6% lettuce juice and 9.4% coconut water. The resulting green juice blend had a composite fit to control value of about 82.7% with a calculated Brix reduction of 23%. Attributes that were tested included total fruit juice flavor, pineapple flavor, banana flavor, total vegetable flavor, celery flavor, coconut flavor, sweetness, sourness, bitterness, astringent flavor, and mouth drying. In particular, the green juice base component had a Brix value of 12.2 °Bx and the final juice blend with added coconut water and lettuce juice had a Brix value of 9.5 °Bx. Surprisingly, acceptable combinations of lower-calorie liquids were different depending on the type of juice base. For example, the green juice base provided an acceptable blend when combined with higher amounts of lettuce juice as compared to coconut water. In contrast, the orange juice base provided an acceptable blend when combined with higher amounts of coconut water than lettuce juice.

In Example 3 (not part of the invention) of Table 1, an apple juice-based formulation was found to have improved taste when the coconut water concentration was higher than lettuce juice. For example, in one alternative not part of the invention, 70% apple juice base was blended with 22% coconut water and 8% lettuce juice. The resulting apple juice blend resulted in a composite fit to control value of about 93% with a calculated sugar reduction of about 21%. Attributes that were tested included total apple, total aroma, total sweet, sweet aroma, honey, vegetable, lettuce, bitter astringent, and aftertaste. For example, the apple juice base component had a Brix value of 11.5 °Bx, and the final juice blend with added coconut water and lettuce juice had a Brix value of 9.1 °Bx.

Additionally, when a value, values, a range, or ranges for a particular variable are given for one or more embodiments, an additional embodiment can be created by forming a new range whose endpoints are selected from any expressly listed values, or any individual value between the disclosed ranges.

## Claims

1. A juice beverage comprising:
from 40 wt. % to 85 wt. % of an orange juice base having a Brix value from 11 °Bx to 15 °Bx;
from 15 wt. % to 30 wt. % of coconut water having a Brix value from 2 °Bx to 6 °Bx; and
from 2 wt. % to 10 wt. % of lettuce juice having a Brix value from 2 °Bx to 4 °Bx such that the Brix value of the lettuce juice is lower than the Brix value of the coconut water;
wherein the juice beverage has organoleptic properties that are similar to identical organoleptic properties of the juice base, wherein the organoleptic properties include aroma, flavor, mouthfeel, texture, aftertaste, citrus flavor, orange flavor, fresh/raw orange flavor, total vegetable flavor, celery flavor, cucumber flavor, sweetness, saltiness, bitterness, astringent flavor, viscosity, or mouth drying and wherein similarity is evaluated by a trained sensory panel consisting of trained experts.

2. The juice beverage according to claim 1, wherein the juice beverage has a fit to control value of at least 85% when attributes of the juice beverage are compared with attributes of the juice base using Quantitative Descriptive Analysis.

3. The juice beverage according to claim 1 or claim 2, wherein the juice beverage is about 100% juice.

4. The juice beverage according to any one of claims 1 to 3, further comprising stevia.

5. A method of making a juice beverage, the method comprising
providing from 40 wt.% to a 85 wt.% of an orange juice base having a Brix value from 11 °Bx to 15 °Bx;
providing from 15 wt.% to 30 wt.% of coconut water having a Brix value from 2 °Bx to 6 °Bx;
providing from 2 wt.% to 10 wt.% of lettuce juice having a Brix value from 2 °Bx to 4 °Bx, wherein the Brix value of the lettuce juice is lower than the Brix value of the coconut water; and
combining the orange juice base with the coconut water and lettuce juice to produce the juice beverage, wherein the juice beverage has a Brix value lower than the Brix value of the orange juice base and wherein a sugar concentration in the juice beverage is 20% to 40% lower than a sugar concentration in the orange juice base.

## Patentansprüche

1. Saftgetränk, umfassend:
zwischen 40 Gew.-% und 85 Gew.-% einer Orangensaftbasis mit einem Brix-Wert zwischen 11 °Bx und 15 °Bx;
zwischen 15 Gew.-% und 30 Gew.-% Kokoswasser mit einem Brix-Wert zwischen 2 °Bx und 6 °Bx; und
zwischen 2 Gew.-% und 10 Gew.-% Salatsaft mit einem Brix-Wert zwischen 2 °Bx und 4 °Bx, derart dass der Brix-Wert des Salatsafts niedriger als der Brix-Wert des Kokoswassers ist;
wobei das Saftgetränk organoleptische Eigenschaften aufweist, die ähnlich mit identischen organoleptischen Eigenschaften der Saftbasis sind, wobei die organoleptischen Eigenschaften Aroma, Geschmack, Mundgefühl, Textur, Nachgeschmack, Zitrusgeschmack, Orangengeschmack, frischen/unverarbeiteten Orangengeschmack, vollständigen Gemüsegeschmack, Selleriegeschmack, Gurkengeschmack, Süße, Salzigkeit, Bitterkeit, adstringierenden Geschmack, Viskosität oder Mundtrockenheit umfassen und wobei die Ähnlichkeit von einem geschulten Sensorikpanel bewertet wird, das aus geschulten Experten besteht.

2. Saftgetränk nach Anspruch 1, wobei das Saftgetränk einen Anpassungswert an das Kontrollprofil von mindestens 85 % aufweist, wenn Attribute des Saftgetränks unter Verwendung von Quantitative Descriptive Analysis mit Attributen der Saftbasis verglichen werden.

3. Saftgetränk nach Anspruch 1 oder Anspruch 2, wobei das Saftgetränk etwa 100% Saft ist.

4. Saftgetränk nach einem der Ansprüche 1 bis 3, das ferner Stevia umfasst.

5. Verfahren zur Herstellung eines Saftgetränks, wobei das Verfahren umfasst:
Bereitstellen von zwischen 40 Gew.-% und 85 Gew.-% einer Orangensaftbasis mit einem Brix-Wert zwischen 11 °Bx und 15 °Bx;
Bereitstellen von zwischen 15 Gew.-% und 30 Gew.-% Kokoswasser mit einem Brix-Wert zwischen 2 °Bx und 6 °Bx;
Bereitstellen von zwischen 2 Gew.-% und 10 Gew.-% Salatsaft mit einem Brix-Wert zwischen 2 °Bx und 4 °Bx, wobei der Brix-Wert des Salatsafts niedriger als der Brix-Wert des Kokoswassers ist; und
Kombinieren der Orangensaftbasis mit dem Kokoswasser und dem Salatsaft zum Zubereiten des Saftgetränks, wobei das Saftgetränk einen Brix-Wert aufweist, der niedriger als der Brix-Wert der Orangensaftbasis ist, und wobei eine Zuckerkonzentration in dem Saftgetränk zwischen 20 % und 40 % niedriger als eine Zuckerkonzentration in der Orangensaftbasis ist.

## Revendications

1. Boisson à base de jus comprenant :
40 % en poids à 85 % en poids d'une base de jus d'orange ayant une valeur Brix de 11 °Bx à 15 °Bx ;
15 % en poids à 30 % en poids d'eau de coco ayant une valeur Brix de 2 °Bx à 6 °Bx ; et
2 % en poids à 10 % en poids de jus de laitue ayant une valeur Brix de 2 °Bx à 4 °Bx de façon que la valeur Brix du jus de laitue soit inférieure à la valeur Brix de l'eau de coco ;
laquelle boisson à base de jus a des propriétés organoleptiques qui sont similaires ou identiques aux propriétés organoleptiques de la base de jus, dans laquelle les propriétés organoleptiques comprennent l'arôme, la saveur, la sensation en bouche, la texture, l'arrière-goût, la saveur d'agrume, la saveur d'orange, la saveur d'orange fraîche/crue, la saveur de légume total, la saveur de céleri, la saveur de concombre, la sucrosité, la salinité, l'amertume, la saveur astringente, la viscosité, ou la sécheresse en bouche, et dans laquelle la similarité est évaluée par un panel sensoriel qualifié consistant en experts qualifiés.

2. Boisson à base de jus selon la revendication 1, laquelle boisson à base de jus a un ajustement à une valeur de référence d'au moins 85 % quand les attributs de la boisson à base de jus sont comparés aux attributs de la base de jus selon une analyse descriptive quantitative.

3. Boisson à base de jus selon la revendication 1 ou la revendication 2, laquelle boisson à base de jus consiste en environ 100 % de jus.

4. Boisson à base de jus selon l'une quelconque des revendications 1 à 3, comprenant en outre du stévia.

5. Procédé de préparation d'une boisson à base de jus, le procédé comprenant :
la fourniture de 40 % en poids à 85 % en poids d'une base de jus d'orange ayant une valeur Brix de 11 °Bx à 15 °Bx ;
la fourniture de 15 % en poids à 30 % en poids d'eau de coco ayant une valeur Brix de 2 °Bx à 6 °Bx ;
la fourniture de 2 % en poids à 10 % en poids de jus de laitue ayant une valeur Brix de 2 °Bx à 4 °Bx, laquelle valeur Brix du jus de laitue est inférieure à la valeur Brix de l'eau de coco ; et
la combinaison de la base de jus d'orange avec l'eau de coco et le jus de laitue pour produire la boisson à base de jus,
dans lequel la boisson à base de jus a une valeur Brix inférieure à la valeur Brix de la base de jus d'orange, et dans lequel la concentration de sucre dans la boisson à base de jus est inférieur de 20 % à 40 % à la concentration de sucre dans la base de jus d'orange.
